# EUROPEAN PATENT APPLICATION

(11) **EP 4 339 843 A1**
(43) Date of publication of application: **20.03.2024**
(21) Application number: 22814743.5
(22) Date of filing: 17.02.2022
(51) Int. Cl.: G06N 3/08, G06N 3/04, G06N 5/00, G06N 5/04

(54) **NEURAL NETWORK OPTIMIZATION METHOD AND APPARATUS**

(30) Priority: 29.05.2021 CN 202110596002
(71) Applicant: Huawei Cloud Computing Technologies Co., Ltd., Guizhou 550025 (CN)
(72) Inventor: ZHOU, Weimin, Guizhou 550025 (CN); MAI, Yuting, Guizhou 550025 (CN); LI, Yi, Guizhou 550025 (CN); GUO, Yijun, Guizhou 550025 (CN); DENG, Binbin, Guizhou 550025 (CN); DAI, Zonghong, Guizhou 550025 (CN)
(74) Representative: Maiwald GmbH
(86) International application number: PCT/CN2022/076556
(87) International publication number: WO 2022/252694

(57) **Abstract**

This application discloses a neural network optimization method and apparatus, and relates to the field of artificial intelligence AI technologies. The method includes: receiving a model file of a to-be-optimized neural network; obtaining a search space of a target neural network architecture based on the model file of the to-be-optimized neural network, where the search space includes a value range of each attribute of each neuron in the target neural network architecture; obtaining the target neural network architecture based on the search space; training the target neural network architecture based on the model file of the to-be-optimized neural network, to obtain a model file of a target neural network; and providing the model file of the target neural network to a user. This application can effectively improve performance of an optimized neural network.

## Description

This application claims priority to Chinese Patent Application No. 202110596002.1, filed on May 29, 2021 and entitled "NEURAL NETWORK OPTIMIZATION METHOD AND APPARATUS", which is incorporated herein by reference in its entirety.

### TECHNICAL FIELD

This application relates to the field of artificial intelligence (artificial intelligence, AI) technologies, and in particular, to a neural network optimization method and apparatus.

### BACKGROUND

With the popularization of neural networks, neural networks have been applied to more and more fields. Before using a neural network, a user usually needs to use a neural network development platform (for example, an automated machine learning (auto machine learning, AutoML) platform) to design and train a neural network. Moreover, the user may not be satisfied with performance of an existing neural network during the use of the existing neural network. In this case, the user may also use the neural network development platform to optimize the existing neural network, to obtain a neural network with better performance.

In the related technology, the neural network development platform may perform optimization operations such as graph optimization and operator fusion on the existing neural network, to obtain a neural network with better performance that can implement functions of the existing neural network.

However, the optimization operations have limited potential for improving performance of the neural network, resulting in poor performance improvement of the neural network.

### SUMMARY

This application provides a neural network optimization method and apparatus. This application can effectively improve performance of an optimized neural network. The technical solutions provided in this application are as follows:

According to a first aspect, this application provides a neural network optimization method. The neural network optimization method includes: receiving a model file of a to-be-optimized neural network; obtaining a search space of a target neural network architecture based on the model file of the to-be-optimized neural network, where the search space includes a value range of each attribute of each neuron in the target neural network architecture; obtaining the target neural network architecture based on the search space; training the target neural network architecture based on the model file of the to-be-optimized neural network, to obtain a model file of a target neural network; and providing the model file of the target neural network to a user.

In the neural network optimization method provided in this application, a to-be-optimized neural network may be first mapped to a relatively similar search space based on a model file of the to-be-optimized neural network, then a target neural network architecture is determined based on the search space, and the target neural network architecture is trained to obtain a target neural network with significantly improved performance, and then a model file of the target neural network is provided to a user. According to the method, performance of the optimized neural network can be significantly improved, and the optimized neural network can be used to resolve a relatively complex task, thereby ensuring an application scope of the optimized neural network.

Optionally, the neural network optimization method further includes: receiving target information input by the user, where the target information includes one or more of the following information: information about hardware running the target neural network, and information indicating a performance requirement of the user for the target neural network. Correspondingly, the obtaining a search space of a target neural network architecture based on the model file of the to-be-optimized neural network includes: obtaining the search space of the target neural network architecture based on the model file of the to-be-optimized neural network and the target information.

When the user chooses to provide the target information to the optimization system, it is convenient for the optimization system to determine the to-be-optimized neural network that needs to be optimized, and the process of optimizing the to-be-optimized neural network by the optimization system can be more targeted, to provide a target neural network that better meets the user requirement to the user.

Evaluation indicator values stored in a knowledge base usually include a plurality of indicator values. In this case, the knowledge base needs to be retrieved based on a plurality of types of evaluation indicator values corresponding to the plurality of indicator values. However, an input by the user may not include all of the plurality of types of evaluation indicator values. In a possible implementation, the obtaining the target neural network architecture based on the search space includes: obtaining, based on the search space, specified information reflecting the performance requirement of the user for the target neural network; performing retrieval in a knowledge base based on the specified information; and when there is an existing neural network architecture that meets the specified information in the knowledge base, determining the existing neural network architecture as the target neural network architecture.

In a possible implementation, the specified information may include a plurality of types of evaluation indicator values, and the obtaining, based on the search space, specified information reflecting the performance requirement of the user for the target neural network includes: obtaining at least one candidate neural network architecture based on the search space; and performing training and inference on each candidate neural network architecture, to obtain the plurality of types of evaluation indicator values of each candidate neural network architecture.

Correspondingly, the performing retrieval in a knowledge base based on the specified information includes: performing retrieval in the knowledge base based on the plurality of types of evaluation indicator values of each candidate neural network architecture; and when any neural network architecture in the knowledge base meets the plurality of types of evaluation indicator values of any candidate neural network architecture, determining that there is an existing neural network architecture that meets the specified information in the knowledge base.

Further, the obtaining the target neural network architecture based on the search space further includes: when there is no existing neural network architecture that meets the specified information in the knowledge base, searching for the target neural network architecture by using an architecture search strategy.

The retrieval is first performed in the knowledge base, so that when there is an existing neural network architecture that matches the search space and the target information in the knowledge base, the existing neural network architecture can be directly determined as the target neural network architecture, without searching for the neural network architecture by using the architecture search strategy. This can improve optimization efficiency of the to-be-optimized neural network and reduce resource consumption for optimizing the neural network.

In a possible implementation, the neural network optimization method further includes: storing, in the knowledge base, intermediate data generated in the process of searching for the target neural network architecture, where the intermediate data includes one or more of the following: the search space of the target neural network architecture, the candidate neural network architecture obtained based on the search space, a hardware-dependent first-type evaluation indicator value, a hardware-independent second-type evaluation indicator value, and information about hardware for running the target neural network.

The intermediate data in the search process is stored in the knowledge base, so that the intermediate data can be used to provide a service for another user. Moreover, the retrieval is first performed in the knowledge base, so that when there is an existing neural network architecture that matches the to-be-optimized neural network in the knowledge base, the architecture search strategy no longer needs to be used to search for a neural network architecture. This can improve optimization efficiency of the to-be-optimized neural network and reduce resource consumption for optimizing the neural network.

Optionally, the training the target neural network architecture based on the model file of the to-be-optimized neural network, to obtain a model file of a target neural network includes: training, based on the model file of the to-be-optimized neural network, the target neural network architecture by using a model cloning method, to obtain the model file of the target neural network.

Training the target neural network architecture by using the model cloning method can make inference behavior of the to-be-optimized neural network cloned to the target neural network architecture, and consistency between the inference behavior of the target neural network and the inference behavior of the to-be-optimized neural network can be ensured.

The obtaining a search space of a target neural network architecture based on the model file of the to-be-optimized neural network includes: inputting the model file of the to-be-optimized neural network into a pre-trained artificial intelligence model, to obtain the search space of the target neural network architecture that is output by the artificial intelligence model.

The search space is predicted by using the artificial intelligence model, so that the artificial intelligence model can automatically detect the task type of the target neural network, the user does not need to notify the optimization system of the task type of the to-be-optimized neural network, thereby simplifying operations that need to be performed by the user during optimization of the neural network.

Optionally, after the training the target neural network architecture based on the model file of the to-be-optimized neural network, to obtain a model file of a target neural network, the neural network optimization method further includes: performing speed optimization on the target neural network by using an optimization strategy, where the optimization strategy includes a graph optimization strategy and an operator optimization strategy; and the providing the model file of the target neural network to a user includes: providing a model file of a speed-optimized target neural network to the user.

Alternatively, after the providing the model file of the target neural network to a user, the neural network optimization method further includes: receiving a speed optimization request sent by the user; performing, based on the speed optimization request, speed optimization on the target neural network by using an optimization strategy, where the optimization strategy includes a graph optimization strategy and an operator optimization strategy; and providing a model file of a speed-optimized target neural network to the user.

The use of the optimization strategy for the speed optimization on the target neural network can reduce a computing amount of the target neural network or other system overheads (for example, access overheads) and can increase an inference speed of the target neural network.

According to a second aspect, this application provides a neural network optimization apparatus. The neural network optimization apparatus includes: an interaction module, configured to receive a model file of a to-be-optimized neural network; an architecture determining module, configured to obtain a search space of a target neural network architecture based on the model file of the to-be-optimized neural network, where the search space includes a value range of each attribute of each neuron in the target neural network architecture; the architecture determining module, further configured to obtain the target neural network architecture based on the search space; a training module, configured to train the target neural network architecture based on the model file of the to-be-optimized neural network, to obtain a model file of the target neural network; and the interaction module, further configured to provide the model file of the target neural network to a user.

Optionally, the interaction module further receives target information input by the user, where the target information includes one or more of the following information: information about hardware running the target neural network, and information indicating a performance requirement of the user for the target neural network; and the architecture determining module is specifically configured to obtain the search space of the target neural network architecture based on the model file of the to-be-optimized neural network and the target information.

Optionally, the architecture determining module is specifically configured to: obtain, based on the search space, specified information reflecting the performance requirement of the user for the target neural network; perform retrieval in a knowledge base based on the specified information; and when there is an existing neural network architecture that meets the specified information in the knowledge base, determine the existing neural network architecture as the target neural network architecture.

Optionally, the specified information includes a plurality of types of evaluation indicator values, and the architecture determining module is specifically configured to: obtain at least one candidate neural network architecture based on the search space; and perform training and inference on each candidate neural network architecture, to obtain the plurality of types of evaluation indicator values of each candidate neural network architecture.

Optionally, the architecture determining module is specifically configured to: perform retrieval in the knowledge base based on the plurality of types of evaluation indicator values of each candidate neural network architecture; and when any neural network architecture in the knowledge base meets the plurality of types of evaluation indicator values of any candidate neural network architecture, determine that there is an existing neural network architecture that meets the specified information in the knowledge base.

Optionally, the architecture determining module is further specifically configured to: when there is no existing neural network architecture that meets the specified information in the knowledge base, search for the target neural network architecture by using an architecture search strategy.

Optionally, the neural network optimization apparatus further includes: a storage module, configured to store, in the knowledge base, intermediate data generated in the process of searching for the target neural network architecture, where the intermediate data includes one or more of the following: the search space of the target neural network architecture, the candidate neural network architecture obtained based on the search space, a hardware-dependent first-type evaluation indicator value, a hardware-independent second-type evaluation indicator value, and information about hardware for running the target neural network.

Optionally, the training module is specifically configured to train, based on the model file of the to-be-optimized neural network, the target neural network architecture by using a model cloning apparatus, to obtain the model file of the target neural network.

Optionally, the architecture determining module is specifically configured to input the model file of the to-be-optimized neural network into a pre-trained artificial intelligence model, to obtain the search space of the target neural network architecture that is output by the artificial intelligence model.

Optionally, the neural network optimization apparatus further includes: an inference module, configured to perform speed optimization on the target neural network by using an optimization strategy, where the optimization strategy includes a graph optimization strategy and an operator optimization strategy; and the interaction module is specifically configured to provide a model file of a speed-optimized target neural network to the user.

Optionally, the interaction module is further configured to receive a speed optimization request sent by the user. Correspondingly, the neural network optimization apparatus further includes: an inference module, configured to perform, based on the speed optimization request, speed optimization on the target neural network by using an optimization strategy, where the optimization strategy includes a graph optimization strategy and an operator optimization strategy; and the interaction module is further configured to provide a model file of a speed-optimized target neural network to the user.

According to a third aspect, this application provides a computer device. The computer device includes a processor and a memory. The memory stores a computer program. When the processor executes the computer program, the computer device implements the method according to any one of the first aspect and the optional implementations of this application.

According to a fourth aspect, this application provides a non-transitory computer-readable storage medium. When instructions in the computer-readable storage medium are executed by a processor, the method according to any one of the first aspect and the optional implementations of this application is implemented.

According to a fifth aspect, this application provides a computer program product including instructions. When the computer program product runs on a computer, the computer is enabled to perform the method according to any one of the first aspect and the optional implementations of this application.

### BRIEF DESCRIPTION OF DRAWINGS

FIG. 1 is a schematic diagram of an optimization system related to a neural network optimization method according to an embodiment of this application;
FIG. 2 is a schematic diagram of an optimization system related to another neural network optimization method according to an embodiment of this application;
FIG. 3 is a schematic diagram of an optimization system related to still another neural network optimization method according to an embodiment of this application;
FIG. 4 is a schematic diagram of an application scenario related to a neural network optimization method according to an embodiment of this application;
FIG. 5 is a flowchart of a neural network optimization method according to an embodiment of this application;
FIG. 6 is a schematic diagram of an operation process of a to-be-optimized neural network according to an embodiment of this application;
FIG. 7 is a schematic diagram of an implementation process of controlling, by using a loss function, a gradient used for tuning a neural network architecture according to an embodiment of this application;
FIG. 8 is a flowchart of another neural network optimization method according to an embodiment of this application;
FIG. 9 is a schematic diagram of a knowledge base according to an embodiment of this application;
FIG. 10 is a schematic diagram of another knowledge base according to an embodiment of this application;
FIG. 11 is a schematic diagram of an optimization system related to yet another neural network optimization method according to an embodiment of this application;
FIG. 12 is a schematic diagram of a process of performing search by using an MBNAS method according to an embodiment of this application;
FIG. 13 is a schematic diagram of a structure of a neural network optimization apparatus according to an embodiment of this application;
FIG. 14 is a schematic diagram of a structure of another neural network optimization apparatus according to an embodiment of this application; and
FIG. 15 is a schematic diagram of a structure of a computer device according to an embodiment of this application.

### DESCRIPTION OF EMBODIMENTS

To make the objectives, technical solutions, and advantages of this application clearer, implementations of this application are described in further detail with reference to the accompanying drawings.

For a better understanding of the technical solutions of this application, some technical terms in this application are described below.

Deep learning (Deep Learning): a machine learning technology based on a deep neural network algorithm, mainly featuring the use of multiple nonlinear transformation to process and analyze data. Deep learning is mainly used in perception, decision-making, and other scenarios in the artificial intelligence field, for example, image and speech recognition, natural language translation, and computer gaming.

Automated machine learning: an advanced control framework for machine learning models, which can automatically search for an optimal parameter configuration of a machine learning model without human intervention.

A neural network (neural network, NN) is a mathematical model that mimics a neural network of a human brain and is intended to achieve human-like artificial intelligence. The neural network may also be referred to as a neural network model. The neural network usually uses a plurality of connected neurons (also referred to as nodes, node) to mimic the neural network of the human brain.

A connection manner and/or a connection structure of neurons in each neural network are/is referred to as a neural network architecture of the neural network. Atypical neural network architecture includes a recurrent neural network (recurrent neural network, RNN) architecture, a convolutional neural network (convolutional neural network, CNN) architecture, or the like. The neural network architecture may be represented by a directed graph (such as a directed acyclic graph). Each edge in the directed graph has a weight, and the weight is used to represent importance of an input node on one edge relative to an output node on the edge. A parameter of the neural network includes the foregoing weight. It should be noted that the weight may be generally obtained by training a neural network using sample data.

Obtaining a neural network model based on the neural network architecture includes two phases. In one phase, weight initialization (weight initialization) is performed on the neural network architecture to obtain an initial neural network model, which is also referred to as an initial child model. The weight initialization refers to initializing a weight (and a bias in some cases) of each edge in the neural network architecture. In a specific implementation, an initial weight value may be generated through Gaussian distribution, to implement the weight initialization. The other phase is to update weights of the initial child model using sample data, to obtain a neural network model, also referred to as a child model (child model). Specifically, the sample data is input into the initial child model. The initial child model may determine a loss value based on a predicted value of the sample data by the initial child model and a ground truth carried in the sample data, and the weights of the initial child model are updated based on the loss value. After multiple rounds of weight iteration, a child model may be obtained. The child model is a trained neural network model that can be used for a specific application.

Quality of a child model can be measured by an evaluation indicator value of the child model. The evaluation indicator value is a metric value obtained by evaluating the child model from at least one dimension. Evaluation indicator values of a child model may be classified into two types. One type of evaluation indicator value changes as hardware changes, and the other type of evaluation indicator value remains unchanged as hardware changes. For ease of description, in embodiments of this application, an evaluation indicator value that changes as hardware changes is referred to as a first-type evaluation indicator value, and an evaluation indicator value that remains unchanged as hardware changes is referred to as a second-type evaluation indicator value.

The first-type evaluation indicator value is a hardware-dependent evaluation indicator value, including a hardware-dependent performance value. In some implementations, the hardware-dependent performance value includes any one or more of a model inference latency (latency), an activation amount, a throughput, power consumption (power), and video memory usage. The second-type evaluation indicator value is a hardware-independent evaluation indicator value, including a hardware-independent precision value. In some implementations, the precision value includes any one or more of accuracy (accuracy), precision (precision), and recall (recall). The hardware-independent evaluation indicator value further includes a parameter quantity and computing power, and the computing power specifically includes floating-point operations per second (floating-point operations per second, FLOPs).

With the improvement in computing power of computer devices in recent years, the industry has proposed the use of a neural network development platform (for example, an AutoMI, platform) to design and train a neural network for a user. Moreover, the user may not be satisfied with performance of an existing neural network during the use of the existing neural network. In this case, the user may also use the neural network development platform to optimize the existing neural network, to obtain a neural network with better performance. A main process of optimization includes: determining a search space of an optimized neural network based on the existing neural network, searching the search space for a neural network architecture of the optimized neural network, and then training the obtained neural network architecture to obtain the optimized neural network.

The search space includes a value range of each attribute of each neuron. The search space defines a range for searching for a neural network architecture, and a group of searchable neural network architectures may be provided based on the range defined based on the search space. Depending on a type of a neural network that needs to be constructed, the search space may be classified into a plurality of types: a chained architecture space, a multi-branch architecture space, a block (block)-based search space, and the like. Each of different search spaces may be represented by a value range of each attribute. For example, the search space may be represented by a value range of two attributes: an identifier of a neuron and an operation performed by the neuron. In some cases, the search space may further be represented based on at least one of a quantity of layers included in the neural network architecture, block data included in each layer, and a quantity of neurons included in each block.

Currently, neural network optimization generally refers to optimization operations such as graph optimization and operator fusion performed on an existing neural network. However, currently, the optimization operations have limited potential for improving performance of the neural network, and performance of the optimized neural network is still poor.

An embodiment of this application provides a neural network optimization method. According to the method, a to-be-optimized neural network may be first mapped to a relatively similar search space based on a model file of the to-be-optimized neural network, then a target neural network architecture is determined based on the search space, and the target neural network architecture is trained to obtain a target neural network with significantly improved performance, and then a model file of the target neural network is provided to a user. Therefore, performance of a neural network optimized by using the neural network optimization method provided in the embodiment of this application can be significantly improved.

The neural network optimization method provided in the embodiment of this application may be applied to an optimization system. The optimization system is configured to perform the neural network optimization method provided in the embodiment of this application. Optionally, the optimization system may be implemented by one or more devices: a terminal, a physical machine, a bare metal server, a cloud server, a virtual machine, a container, or the like.

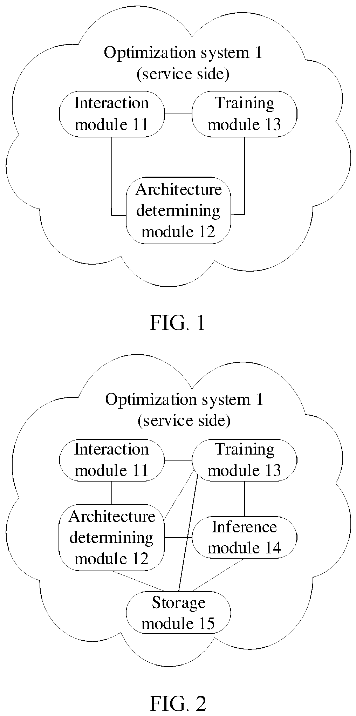

The optimization system may be logically divided into a plurality of parts, each of which has different functions. For example, as shown in FIG. 1, an optimization system 1 may include the following functional modules: an interaction module 11, an architecture determining module 12, and a training module 13. The interaction module 11 is configured to receive a model file of a to-be-optimized neural network, and provide a model file of an optimized target neural network to a user. The architecture determining module 12 is configured to obtain a search space of a target neural network architecture based on the model file of the to-be-optimized neural network, and obtain the target neural network architecture based on the search space. The training module 13 is configured to train the target neural network architecture based on the model file of the to-be-optimized neural network, to obtain the model file of the target neural network. Because the neural network needs to be provided to the user in the form of a model file, both providing the neural network to the user and providing the model file of the neural network to the user in the following description mean providing the neural network to the user, and are not distinguished for ease of description.

Optionally, as shown in FIG. 2, the optimization system 1 may further include an inference module 14. The inference module 14 is configured to provide an inference function. For example, in the process of obtaining the target neural network architecture, the architecture determining module 12 may generate a plurality of candidate neural network architectures, to obtain the target neural network architecture based on the plurality of candidate neural network architectures. In this case, the inference module 14 may perform, on hardware, inference on models corresponding to the plurality of candidate neural network architectures, to obtain first-type evaluation indicator values such as inference latencies corresponding to the plurality of candidate neural network architectures running on the hardware. In this case, the training module 13 is further configured to train the models corresponding to the plurality of candidate neural network architectures generated by the architecture determining module 12, to obtain second-type evaluation indicator values such as precision values corresponding to the plurality of candidate neural network architectures. Correspondingly, the architecture determining module 12 is specifically configured to obtain the target neural network architecture based on the first-type evaluation indicator values and the second-type evaluation indicator values of the plurality of candidate neural network architectures.

Further, the inference module 14 is further configured to perform speed optimization on the target neural network. In this case, the interaction module 11 is specifically configured to provide a model file of a speed-optimized target neural network to the user. Moreover, the inference module 14 is further configured to obtain a second-type evaluation indicator value of the target neural network, to provide the evaluation indicator value of the target neural network to the user while providing the model file of the target neural network to the user.

Moreover, as shown in FIG. 2, the optimization system 1 may further include a storage module 15. The storage module 15 is configured to store intermediate data in the process of obtaining the target neural network architecture, to improve optimization efficiency of the to-be-optimized neural network. In addition, the foregoing modules may further have other functions, which are not enumerated herein.

Multiple parts of the optimization system 1 may be deployed on any one of a terminal, a physical machine, a bare metal server, a cloud server, a virtual machine, and a container. Alternatively, multiple parts of the optimization system 1 may be deployed in a distributed manner on one or more of a plurality of terminals, a plurality of physical machines, a plurality of bare metal servers, a plurality of cloud servers, a plurality of virtual machines, and a plurality of containers.

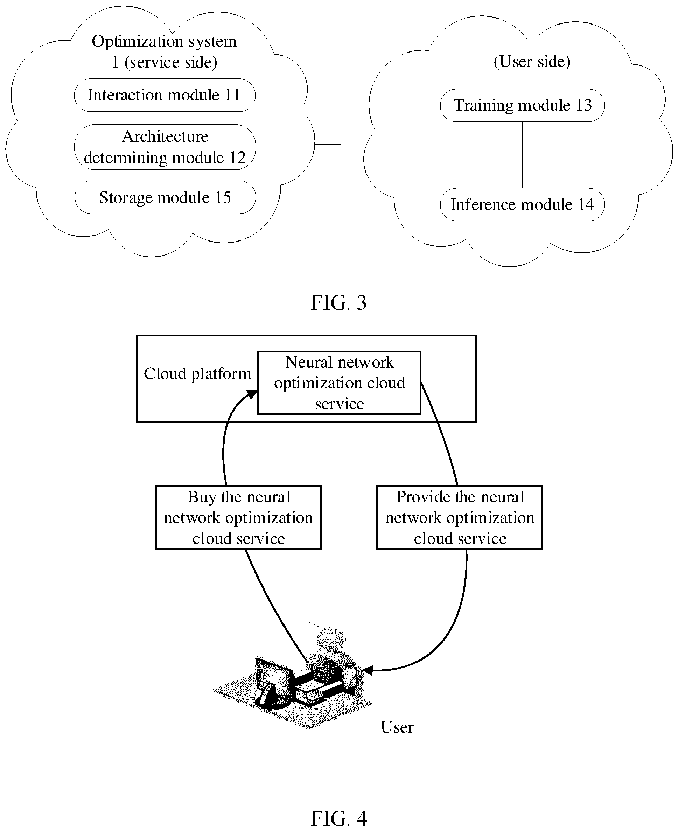

Moreover, as shown in FIG. 1 and FIG. 2, the training module 13 may be located on a service side. For example, the training module 13 may be provided by a provider of a neural network optimization service. Certainly, in some other embodiments, as shown in FIG. 3, the training module 13 may alternatively be located on a user side, that is, the training module 13 may be provided by a user that expects to use the neural network optimization service. The training module 13 provided by the user is used to train the child model, so that leakage of training data used to train the child model can be avoided, and data security is ensured. The neural network optimization service is used to provide a function implemented by the neural network optimization method provided in the embodiment of this application. Alternatively, it can be learned from the foregoing description that, because the training module 13 may be configured to train the target neural network architecture, and may be further configured to train the models corresponding to the plurality of candidate neural network architectures generated by the architecture determining module 12, the training module 13 may include at least two parts. A first part of the at least two parts is configured to train the target neural network architecture, and a second part of the at least two parts is configured to train the models corresponding to the plurality of candidate neural network architectures generated by the architecture determining module 12. In a deployment manner, the first part may be located on the user side, to use the training data on the user side to perform a training process; and the second part may be located on the service side.

Similarly, as shown in FIG. 2, the inference module 14 may be located on the service side. Alternatively, as shown in FIG. 3, the inference module 14 may also be located on the user side. When the inference module 14 is located on the user side, the inference module 14 provided by the user is used to perform inference on the models corresponding to the plurality of candidate neural network architectures generated by the architecture determining module 12, and the models do not need to be uploaded to the service side. In this way, model leakage can be avoided, and model privacy can be ensured. Alternatively, because the inference module 14 may be configured to perform, on the hardware, inference on the models corresponding to the plurality of candidate neural network architectures generated by the architecture determining module 12, and may be further configured to obtain the second-type evaluation indicator value of the target neural network, the inference module 14 includes at least two parts, which is similar to the deployment manner of the training module 13. A first part of the at least two parts is configured to obtain the second-type evaluation indicator value of the target neural network, and a second part of the at least two parts is configured to obtain the first-type evaluation indicator values such as the inference latencies of the plurality of candidate neural network architectures running on the hardware. Moreover, in a deployment manner, the first part may be located on the user side, to use the training data on the user side to obtain the second-type evaluation indicator value of the target neural network; and the second part may be located on the service side.

In a possible implementation, some or all of the modules in the optimization system 1 may be implemented by using resources in a cloud platform. Basic resources owned by a cloud service provider, for example, a computing resource, a storage resource, and a network resource, are deployed in the cloud platform. The computing resource may be a large quantity of computer devices (for example, servers). The optimization system 1 may use the basic resources deployed in the cloud platform to implement the neural network optimization method provided in the embodiment of this application, to optimize the neural network. For example, as shown in FIG. 3, when the interaction module 11 and the architecture determining module 12 are located on the service side, and the training module 13 and the inference module 14 are located on the user side, the interaction module 11 and the architecture determining module 12 may be deployed in a public cloud platform, and the training module 13 and the inference module 14 may be deployed on a private cloud platform. In this way, the neural network optimization method provided in the embodiment of this application may be implemented based on a hybrid cloud platform formed by the public cloud platform and the private cloud platform. Alternatively, as shown in FIG. 1 and FIG. 2, the optimization system 1 may be all deployed in the public cloud platform or all deployed on the private cloud platform.

When some or all of the modules in the optimization system 1 are implemented by using the resources in the cloud platform, as shown in FIG. 4, the neural network optimization method provided in the embodiment of this application can be abstracted by the cloud service provider on the cloud platform as a neural network optimization cloud service that is provided to the user. After the user buys the neural network optimization cloud service on the cloud platform, the cloud platform can utilize a cloud service provided by the optimization system 1 to optimize a neural network provided by the user. Moreover, depending on deployment manners of the modules in the optimization system 1, the cloud platform may provide different neural network optimization cloud services to the user. For example, for the different deployment manners of the training module 13 and the inference module 14, the cloud platform may provide at least the following two neural network optimization cloud services to the user:

In a first neural network optimization cloud service, both the training module 13 and the inference module 14 are deployed on the service side. For example, the parts of the optimization system 1 are all deployed in a cloud computing cluster of the public cloud platform. After buying the neural network optimization cloud service, the user may send a to-be-optimized neural network to the public cloud platform. The public cloud platform may optimize the to-be-optimized neural network by using the neural network optimization cloud service provided by the optimization system 1, and provide an optimized neural network to the user.

In a second neural network optimization cloud service, both the training module 13 and the inference module 14 are deployed on the user side, and the interaction module 11 and the architecture determining module 12 are deployed on the service side. For example, the interaction module 11 and the architecture determining module 12 are deployed in a cloud computing cluster of the public cloud platform, and the training module 13 and the inference module 14 are deployed in a cloud computing cluster of the private cloud platform. After buying the neural network optimization cloud service, the user needs to send the to-be-optimized neural network to the public cloud platform. The public cloud platform uses the architecture determining module 12 to provide a plurality of candidate neural network architectures or models corresponding to the plurality of candidate neural network architectures to the user based on the to-be-optimized neural network. Then, the user uses the training module 13 and the inference module 14 to obtain the evaluation indicator values of the plurality of candidate neural network architectures and send the evaluation indicator values to the public cloud platform. The public cloud platform determines the target neural network architecture from the plurality of candidate neural network architectures based on the evaluation indicator values. Then, the public cloud platform provides the target neural network architecture or the model corresponding to the neural network architecture to the user, so that the user uses the training module 13 to train the target neural network architecture or the model corresponding to the neural network architecture, to obtain an optimized target neural network.

Optionally, in embodiments of this application, the cloud platform may be a cloud platform of a center cloud or a cloud platform of an edge cloud, or may include cloud platforms of a center cloud and an edge cloud, which is not specifically limited in embodiments of this application. Moreover, when the cloud platform includes the cloud platforms of the center cloud and the edge cloud, the optimization system may be partially deployed in the cloud platform of the edge cloud, and partially deployed in the cloud platform of the center cloud.

It should be noted that FIG. 1 to FIG. 3 illustrate merely some specific examples of the optimization system provided in embodiments of this application. Moreover, the foregoing division and deployment manners of the functional modules in the optimization system are merely examples. This application does not limit the division manner of the functional modules in the optimization system and the deployment manner of the functional modules. In actual application, adaptive deployment may be performed based on a computing capability or a specific application requirement of a computing device for deploying the optimization system.

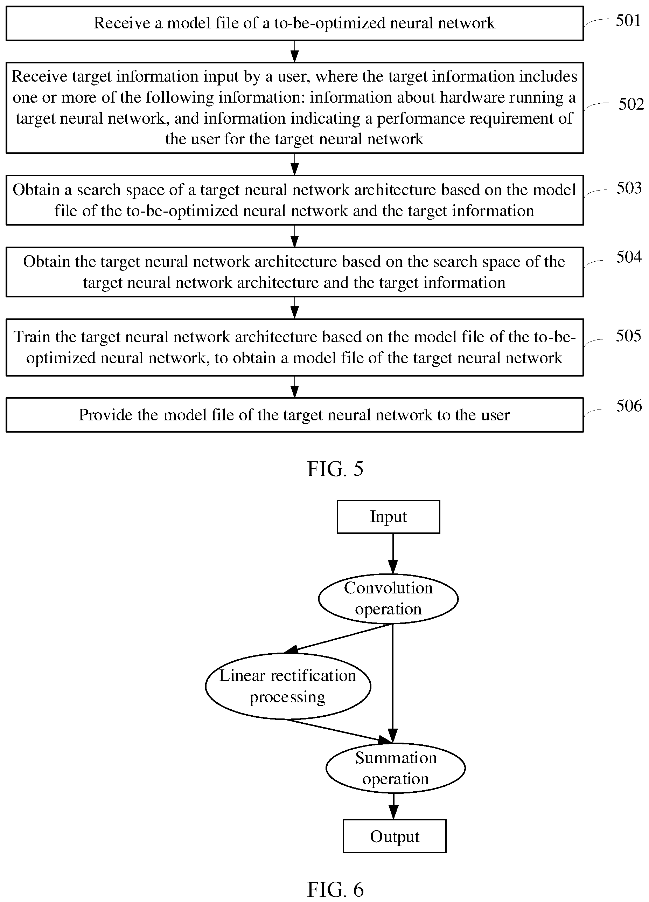

For a better understanding of the technical solutions in embodiments of this application, a neural network optimization method in an embodiment of this application is described below by using an example in which the optimization system shown in FIG. 2 is used to implement the neural network optimization method provided in the embodiment of this application. FIG. 5 is a flowchart of a neural network optimization method according to an embodiment of this application. As shown in FIG. 5, the neural network optimization method includes the following steps.

Step 501: Receive a model file of a to-be-optimized neural network.

When a user expects to use an optimization system to optimize the to-be-optimized neural network, the user needs to provide the model file of the to-be-optimized neural network to the optimization system, so that the optimization system determines the to-be-optimized neural network that needs to be optimized. The model file of the to-be-optimized neural network is used to indicate the to-be-optimized neural network. For example, the to-be-optimized neural network is essentially a directed graph, the directed graph may be represented by a model file, and the model file may be a file with a suffix of .ph. As shown in FIG. 6, an operation process of a to-be-optimized neural network represented by a model file is as follows: First, a convolution operation (conv) is performed on input data (input); then linear rectification processing is performed on a convolution operation result by using a linear rectification function (rectified linear unit, ReLU), and a summation operation (add) is performed on a result processed by the rectified linear unit and the convolution operation result; and then a summation operation result is output (output). The linear rectification function, also referred to as a rectified linear unit, is an activation function (activation function) commonly used in an artificial neural network, and generally refers to a nonlinear function represented by a ramp function and its variants. Commonly used linear rectification functions include a ramp function f(x) = max(0, x) and a leaky rectified linear unit (leaky reLU), where x is an input to a neuron (Neuron).

Step 502: Receive target information input by the user, where the target information includes one or more of the following information: information about hardware running a target neural network (also referred to as hardware information), and information indicating a performance requirement of the user for the target neural network (also referred to as performance requirement information).

When the user uses the optimization system to optimize the to-be-optimized neural network, in addition to providing the model file of the to-be-optimized neural network to the optimization system, the user may further provide, to the optimization system, a related requirement of the user for optimizing the to-be-optimized neural network. The related requirement may be represented by using the target information. Optionally, the target information may include one or more of the following: information about hardware that the user expects to run the target neural network, and the information indicating the performance requirement of the user for the target neural network. Moreover, the performance requirement information may further indicate a performance requirement of the target neural network on a specified dataset, and the performance requirement information may include information indicating at least one of a first-type evaluation indicator value and a second-type evaluation indicator value of the target neural network. For example, the hardware information indicates that the user expects that hardware running the target neural network is a graphics processing unit (graphics processing unit, GPU) of a specific model; and the performance requirement information indicates that the user expects that an inference precision of the target neural network is 95.94%, or the performance requirement information indicates that the user expects that an inference precision of the target neural network on the CIFAR-10 dataset is 95.94%. The target neural network is a neural network obtained by optimizing the to-be-optimized neural network by the optimization system.

It should be noted that step 502 is an optional step. When using the optimization system to optimize the to-be-optimized neural network, the user may choose whether to provide the target information to the optimization system. When the user chooses to provide the target information to the optimization system, the process of optimizing the to-be-optimized neural network by the optimization system can be more targeted, to provide a target neural network that better meets the user requirement to the user.

Step 503: Obtain a search space of a target neural network architecture based on the model file of the to-be-optimized neural network and the target information.

It can be learned from the foregoing description that step 502 is an optional step. When step 502 is not performed, that is, the optimization system does not receive the target information, the search space of the target neural network architecture may not be obtained based on the target information. An implementation process of obtaining the search space includes: obtaining the search space based on the model file of the to-be-optimized neural network. An implementation process of obtaining the search space of the target neural network architecture based on the model file of the to-be-optimized neural network and the target information is described below by using an example in which step 502 is performed. The search space includes a value range of each attribute of each neuron in the target neural network architecture.

In an implementation of obtaining the search space, the search space may be predicted by using a pre-trained artificial intelligence model. The artificial intelligence model can output the search space of the target neural network architecture based on the input model file of the to-be-optimized neural network and the input target information. A process of predicting the search space by using the artificial intelligence model may include the following: The artificial intelligence model analyzes network architecture characteristics of the to-be-optimized neural network based on the model file of the to-be-optimized neural network, to obtain possible task types of the target neural network, and further determines a task type of the target neural network from the possible task types based on the target information. For example, from a classification task and a detection task, it is further determined that the task type of the target neural network is the classification task or the detection task. Then, a search space corresponding to the task type of the target neural network is output based on a correspondence between a task type and a search space, so that the search space of the target neural network architecture.

Because there is an association relationship between the target information and a task type of a neural network, the task type of the target neural network may be further determined from the possible task types based on the target information and by using the association relationship. For example, it is assumed that the association relationship between the target information and the task type of the neural network is as follows: Generally, a GPU of a model Al is used to implement a task of a task type A2, and a GPU of a model B1 is used to implement a task of a task type B2. When the target information indicates that hardware running the target neural network is the GPU of the model A1, it may be determined, from the possible task types according to the association relationship, that the task type of the target neural network is the task type A2.

Moreover, it can be learned from the process of predicting the search space by the artificial intelligence model that, when the optimization system receives the target information, in the process of determining the search space, the target information can be used to further filter the possible task types determined based on the model file of the to-be-optimized neural network. Therefore, for different cases in which the optimization system receives or does not receive the target information, whether the target information is used for further filtering has impact on the implementation process of determining the search space. Moreover, when the optimization system receives the target information, because the target information can be used for further filtering, a more matching search space can be determined for the target neural network, and performance of the target neural network optimized based on the search space can be improved.

In the implementation of determining the search space, because the artificial intelligence model can automatically detect the task type of the target neural network, the user does not need to notify the optimization system of the task type of the to-be-optimized neural network, thereby simplifying operations that need to be performed by the user during optimization of the neural network. Optionally, the artificial intelligence model may be a classification model, for example, may be a support vector machine (support vector machine, SVM).

It should be noted that before the model file of the to-be-optimized neural network is input into the artificial intelligence model, a data type of the model file of the to-be-optimized neural network may be further converted into a data type that can be identified by the artificial intelligence model. For example, the model file of the to-be-optimized neural network is converted into one-dimensional feature data, and then the one-dimensional feature data is input into the artificial intelligence model. The one-dimensional feature data indicates a type of each node in the to-be-optimized neural network and a relationship between nodes. Optionally, the model file of the to-be-optimized neural network may be converted into the one-dimensional feature data by using a graph algorithm (for example, a graph kernel (graph kernel) algorithm).

For example, still taking the model file of the to-be-optimized neural network in step 501 as an example, a result of converting the model file into one-dimensional feature data is shown in Table 1. For each row of data in Table 1, "t # N" represents an N^{th} graph, for example, "t # 0" represents a 0^{th} graph; "v M L" represents that a label of an M^{th} vertex in the graph is L, for example, "v01" represents that a label of a 0^{th} vertex in the graph is 1; "e P Q" represents that a P^{th} vertex and a Q^{th} vertex are connected by an edge, for example, "e01" represents that a 0^{th} vertex and a 1^{st} vertex are connected by an edge; and "t#-1" represents the end of the model file. Vertices in FIG. 6 are arranged according to a top-down and left-right sequence.

**Table 1**

| | |
|---|---|
| 01 | t # 0 |
| 02 | v01 |
| 03 | v12 |
| 04 | v23 |
| 05 | e01 |
| 06 | e02 |
| 07 | e12 |
| 08 | t#-1 |

Step 504: Obtain the target neural network architecture based on the search space of the target neural network architecture and the target information.

It can be learned from the foregoing description that step 502 is an optional step. When step 502 is not performed, that is, the optimization system does not receive the target information, the target neural network architecture may not be obtained based on the target information. An implementation process of obtaining the target neural network architecture includes: obtaining the target neural network architecture based on the model file of the to-be-optimized neural network. An implementation process of obtaining the target neural network architecture based on the model file of the to-be-optimized neural network and the target information is described below by using an example in which step 502 is performed.

After the search space is determined, the target neural network architecture may be obtained based on the search space and the target information. Optionally, based on the search space and the target information, the target neural network architecture may be searched for by using an architecture search strategy. Alternatively, the optimization system may be configured with a knowledge base, and may perform retrieval in the knowledge base based on the search space and the target information, to obtain the target neural network architecture. Alternatively, when the optimization system is configured with a knowledge base, retrieval may be first performed in the knowledge base based on the search space and the target information. When there is an existing neural network architecture that matches the search space and the target information in the knowledge base, the existing neural network architecture is determined as the target neural network architecture. When there is no existing neural network architecture that matches the search space and the target information in the knowledge base, based on the search space and the target information, the target neural network architecture is searched for by using an architecture search strategy. To improve readability of this embodiment of this application, implementation processes of performing retrieval in a knowledge base and searching by using an architecture search strategy are not described herein, but are described in the following content.

The retrieval is first performed in the knowledge base, so that when there is an existing neural network architecture that matches the search space and the target information in the knowledge base, the existing neural network architecture can be directly determined as the target neural network architecture, without searching for the neural network architecture by using the architecture search strategy. This can improve optimization efficiency of the to-be-optimized neural network and reduce resource consumption for optimizing the neural network.

In some embodiments, to facilitate the use of intermediate data obtained in the search process to serve other users, intermediate data generated in the process of searching for the target neural network architecture may be further stored in the knowledge base, to improve optimization efficiency of the to-be-optimized neural network. Optionally, the intermediate data includes one or more of the following: the search space of the target neural network architecture, a candidate neural network architecture obtained based on the search space, a hardware-dependent first-type evaluation indicator value, a hardware-independent second-type evaluation indicator value, and information about hardware for running the target neural network. Optionally, the first-type evaluation indicator value includes an inference latency for running on hardware and the like, and the second-type evaluation indicator value includes a precision value and the like.

Step 505: Train the target neural network architecture based on the model file of the to-be-optimized neural network, to obtain a model file of the target neural network.

Optionally, the target neural network architecture may be trained by using a model cloning method provided in an embodiment of this application, to obtain the model file of the target neural network. The model cloning method is described below.

A basic principle of the model cloning method is as follows: With an objective of controlling an output of the target neural network architecture for any training data and fitting an output of the to-be-optimized neural network for the any training data, the target neural network architecture is trained, to obtain a target neural network after the completion of the training. In other words, when the target neural network architecture is trained by using the model cloning method, whether the training of the target neural network architecture is completed may be determined by determining whether a difference between the output of the target neural network architecture for any training data and the output of the to-be-optimized neural network for the any training data tends to be the smallest. The fitting refers to adjusting weight coefficients in the target neural network architecture, so that a difference between an output of the neural network architecture obtained after the adjustment of the weight coefficients for any training data and an output of the to-be-optimized neural network for the any training data tends to be the smallest.

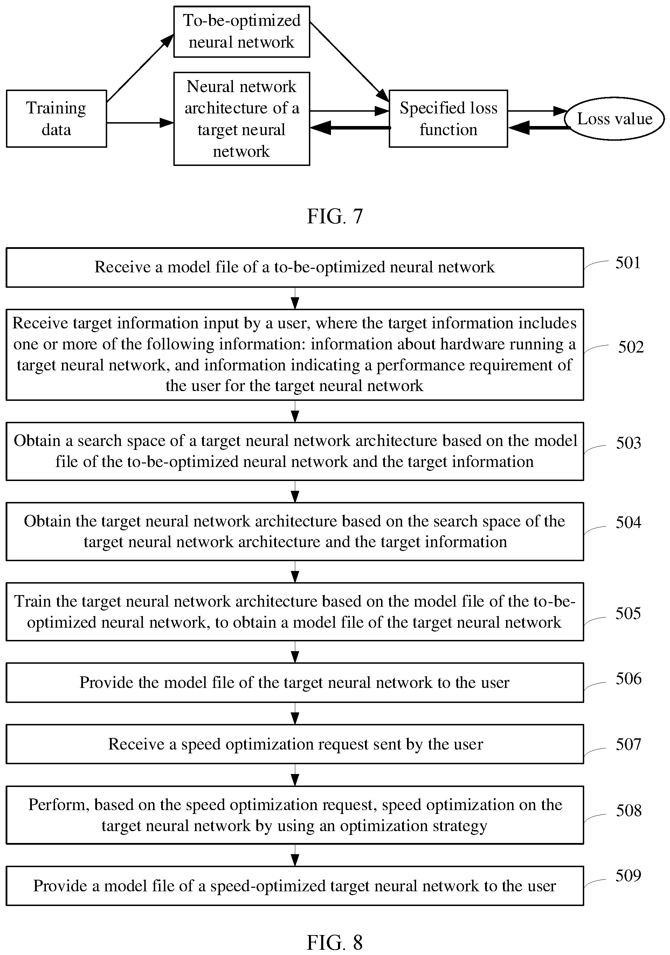

In a possible implementation, controlling an output of the target neural network architecture for any training data and fitting an output of the to-be-optimized neural network for the any training data may be implemented by controlling, by using a loss function, a gradient used for tuning the neural network architecture. As shown in FIG. 7, the implementation process includes the following: For any training data, target parameters of the target neural network architecture and the to-be-optimized neural network for the any training data are separately obtained; then a loss value of a specified loss function is obtained based on the target parameters of the target neural network architecture and the to-be-optimized neural network for the any training data; and then the loss value is backpropagated to the target neural network architecture, to determine, based on the loss value, a gradient used for tuning the neural network architecture; and then weight parameters of the target neural network architecture are adjusted based on the determined gradient, until the training objective is achieved. Optionally, a target parameter of a neural network for training data is a logarithm of a ratio of a quantity of times that the event A occurs to a quantity of times that the event A does not occur in the neural network for the training data, that is, logits. FIG. 7 is a schematic diagram of a process of training the target neural network architecture when the target parameter is logits. In addition, a process of obtaining the loss value of the specified loss function is alternatively as follows: Both the target parameter of the target neural network architecture for the any training data and the target parameter of the to-be-optimized neural network for the any training data are used as an input of the specified loss function, and an output of the specified loss function is the loss value of the specified loss function. A specific implementation form of the specified loss function may be designed based on an application requirement, and is not specifically limited in embodiments of this application.

Moreover, during the training of the target neural network architecture, a public dataset may be used as a training set. For example, a public dataset such as the ImageNet dataset may be used. Because the ImageNet dataset has rich image information, using the ImageNet dataset as a training set can effectively ensure a training effect of a neural network. Moreover, by using a public dataset, the user does not need to upload training data, which can resolve the problem that the user cannot provide data for training a model due to limitations on privacy, law, or transmission of the data. In addition, compared with a related technology for generating training data by using a generative adversarial network (generative adversarial network, GAN) or the like, using a public dataset as a training set avoids impact on a training result due to disadvantages of the generative adversarial network, such as unstable training, difficult tuning, high training costs, difficulty in achieving a good effect on a complex task or a high-resolution dataset, and the like.

It can be learned from the foregoing description that, training the target neural network architecture by using the model cloning method can make inference behavior of the to-be-optimized neural network cloned to the target neural network architecture, and consistency between the inference behavior of the target neural network and the inference behavior of the to-be-optimized neural network can be ensured. Moreover, the use of the neural network optimization method provided in this embodiment of this application, the use of the public dataset, and the design of the specified loss function make it possible that the optimized target neural network architecture can change relative to the neural network architecture of the to-be-optimized neural network, thereby further ensuring the precision of the target neural network.

Step 506: Provide the model file of the target neural network to the user.

After the target neural network is obtained through training, the model file of the target neural network may be provided to the user, so that the user uses the target neural network.

Optionally, after the target neural network is obtained through training, the optimization system may further perform speed optimization on the target neural network, and provide a speed-optimized neural network to the user. The speed optimization may include offline optimization and online optimization. The offline optimization refers to speed optimization on the target neural network when the user is not using the target neural network for inference. The online optimization refers to speed optimization on the target neural network when the user is using the target neural network for inference.

For the offline optimization, after the target neural network is obtained through training, the speed optimization may be directly performed on the target neural network by using an optimization strategy. Correspondingly, an implementation process of step 506 includes: providing a model file of a speed-optimized target neural network to the user. The optimization strategy includes a graph optimization strategy and an operator optimization strategy. The graph optimization strategy may include: performing graph equivalent transformation on a graph representing the target neural network, and then adjusting a structure of the target neural network based on a graph obtained after the equivalent transformation; and/or fusing an operator implemented by a plurality of nodes in the target neural network into one node for implementation, and then adjusting the structure of the target neural network based on an operator fusion result. The operator optimization strategy may include: based on a type and a parameter of an operator, using an operator search technology to search for an optimal operator implementation algorithm from a plurality of algorithms for implementing the operator. A collection of one or more operations performed on an operation object is referred to as an operator.

The use of the optimization strategy for the speed optimization on the target neural network can reduce a computing amount of the target neural network or other system overheads (for example, access overheads) and can increase an inference speed of the target neural network.

In another implementation of the offline optimization, after the model file of the target neural network is provided to the user, the speed optimization may be performed on the target neural network based on a request of the user. Correspondingly, as shown in FIG. 8, the neural network optimization method further includes the following steps.

Step 507: Receive a speed optimization request sent by the user.

In the process of obtaining the target neural network, if the user thinks that a speed of the target neural network needs to be optimized, the user may further send the speed optimization request to the optimization system, to request the optimization system to perform the speed optimization on the target neural network by using an optimization strategy.

Step 508: Perform, based on the speed optimization request, speed optimization on the target neural network by using an optimization strategy.

The optimization strategy includes a graph optimization strategy and an operator optimization strategy. For an implementation of the optimization strategy, refer to the foregoing description. Details are not described herein again.

Step 509: Provide a model file of a speed-optimized target neural network to the user.

An implementation process of performing retrieval in the knowledge base to obtain the target neural network architecture is described below. For ease of understanding, the knowledge base is first described, and then the implementation process of performing retrieval in the knowledge base is described.

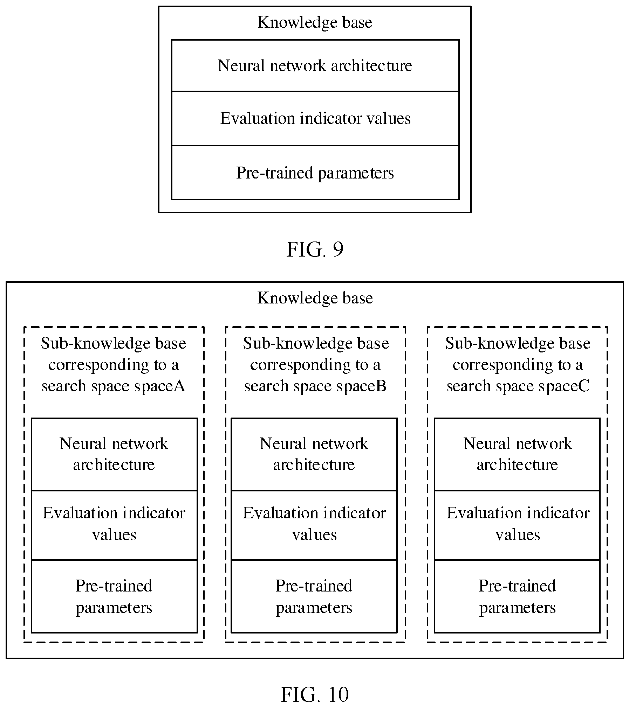

The knowledge base may be considered as a database, and the knowledge base stores information related to a neural network model architecture. Optionally, the knowledge base includes at least three types of information, and the at least three types of information include pre-trained parameters, evaluation indicator values, and a neural network architecture of a neural network. The evaluation indicator values include a first-type evaluation indicator value, a second-type evaluation indicator value, and other evaluation indicator values. The first-type evaluation indicator value includes an inference latency for running on hardware and power consumption and the like, and the second-type evaluation indicator value includes a precision value and the like. The pre-trained parameters include testing data for testing precision in a training set of the neural network and other data (such as training data) for knowledge transfer. Knowledge transfer refers to generating data for obtaining a neural network required by a user based on user requirements and existing data in a knowledge base. The pre-trained parameters and the evaluation indicator values may be considered as label information of the neural network architecture. FIG. 9 is a schematic diagram of a knowledge base including pre-trained parameters, evaluation indicator values, and a neural network architecture of a neural network.

Information in the knowledge base may be classified into initial information and subsequent information according to the source. The initial information may come from a public dataset and a public model library. The subsequent information may be accumulated in a process of optimizing the neural network. For example, the subsequent information may be intermediate data obtained in a process of searching for a neural network architecture by using a search strategy. The intermediate data obtained in the process of searching for the neural network architecture for the user by using the search strategy is stored in the knowledge base, so that the intermediate data can be used to provide a service for another user. This can improve optimization efficiency of the to-be-optimized neural network and reduce resource consumption for optimizing the neural network.

Optionally, the implementation of performing retrieval in the knowledge base based on the search space of the target neural network architecture and the target information includes: querying, based on the search space and the target information, whether the knowledge base stores an existing neural network architecture that uses the search space and meets the target information. When the knowledge base stores the existing neural network architecture that uses the search space and meets the target information, it indicates that the existing neural network architecture matches a task requirement of the target neural network, and the existing neural network architecture may be determined as the target neural network architecture.

Because the pre-trained parameters and the evaluation indicator values may be considered as the label information of the neural network architecture, the process of querying whether the knowledge base stores an existing neural network architecture that uses the search space and meets the target information may be considered as a process of querying, based on the search space and the target information, the pre-trained parameters and the evaluation indicator values of the knowledge base for whether label information that uses the search space and matches the target information is stored. When there is the label information that uses the search space and matches the target information in the pre-trained parameters and the evaluation indicator values that are stored in the knowledge base, a neural network architecture that uses the search space and carries the label information that matches the target information is determined as an existing neural network architecture that uses the search space and meets the target information. Moreover, the search space and the label information that matches the target information may jointly indicate a training set for training the target neural network. The label information that matches the target information may indicate the first-type evaluation indicator value, the second-type evaluation indicator value, and other evaluation indicator values of the target neural network. The neural network architecture using the search space may indicate that the neural network architecture and the to-be-optimized neural network belong to the same type of neural network.

Querying whether the knowledge base stores an existing neural network architecture that uses the search space refers to analyzing a network structure of the neural network architecture stored in the knowledge base, to determine whether a value range of each attribute of each neuron in the neural network architecture falls within a range included in the search space. When the value range of each attribute of each neuron in the neural network architecture falls within the range included in the search space, it is determined that the neural network architecture uses the search space.

The evaluation indicator values stored in the knowledge base usually include a plurality of indicator values, for example, includes the first-type evaluation indicator value and the second-type evaluation indicator value. When it is queried whether there is the label information that matches the target information in the knowledge base, the plurality of indicator values need to be separately matched with the target information. When the plurality of indicator values all match the target information, it is determined that there is the label information that matches the target information in the knowledge base. Correspondingly, in this case, it needs to be ensured that the target information includes a plurality of types of evaluation indicator values corresponding to the plurality of indicator values.

However, the target information input by the user may include only some types of evaluation indicator values in the plurality of types of evaluation indicator values. In this case, some types of evaluation indicator values that are not included in the target information may be obtained based on the search space of the target neural network architecture. The some types of evaluation indicator values obtained and the some types of evaluation indicator values in the target information jointly form the plurality of types of evaluation indicator values. Similarly, when the optimization system does not receive the target information, the plurality of types of evaluation indicator values corresponding to the plurality of indicator values may be obtained based on the search space. For ease of description, a set including the evaluation values obtained based on the search space and the evaluation values included in the target information is referred to as specified information. The specified information reflects a performance requirement of the user for the target neural network, and the specified information includes the plurality of types of evaluation indicator values corresponding to the plurality of indicator values in the knowledge base.

In a possible implementation, the implementation of obtaining the specified information based on the search space of the target neural network architecture includes: obtaining at least one candidate neural network architecture based on the search space; and performing training and inference on each candidate neural network architecture, to obtain the plurality of types of evaluation indicator values of each candidate neural network architecture. The search space may be sampled to obtain a value of each attribute of each neuron in each candidate neural network architecture, to generate at least one candidate neural network architecture. For this process, refer to the corresponding step 5041. Moreover, weight initialization may be performed on each candidate neural network architecture by using the training module, to obtain a plurality of initial child models, and then the plurality of initial child models are trained by using the training data, to obtain second-type evaluation indicator values of the plurality of candidate child models. For this process, refer to the corresponding step 5042. An initial child model is obtained by performing weight initialization on each candidate neural network architecture on hardware, and then the inference module may be used to perform inference on the initial child model to obtain a first-type evaluation indicator value of the initial child model on the hardware. For this process, refer to the corresponding step 5043.

In this case, because a plurality of types of evaluation indicator values can be obtained based on each candidate neural network architecture, when retrieval is performed in the knowledge base, the retrieval may be performed in the knowledge base based on the plurality of types of evaluation indicator values of each candidate neural network architecture; and when any neural network architecture in the knowledge base meets the plurality of types of evaluation indicator values of any candidate neural network architecture, it is determined that there is an existing neural network architecture that meets the specified information in the knowledge base.

It should be noted that when a plurality of candidate neural network architectures are obtained based on the search space, there may be a plurality of existing neural network architectures that meet the specified information in the knowledge base. In this case, one of the plurality of existing neural network architectures may be determined as the target neural network architecture based on a specified filtering strategy. The specified screening strategy may be determined according to an application requirement. For example, the neural network architecture may be randomly selected, or one of the plurality of existing neural network architectures with the best performance may be determined as the target neural network architecture. This is not specifically limited in embodiments of this application.

Optionally, the information in the knowledge base may be stored according to the search space. In a possible implementation, the knowledge base may be divided into a plurality of sub-knowledge bases on a per-search space basis, and information stored in a sub-knowledge base corresponding to any search space is information obtained in the search space. For example, as shown in FIG. 10, the knowledge base may be divided into three sub-knowledge bases according to search spaces: spaceA, spaceB, and spaceC. Information stored in the sub-knowledge base corresponding to the search space spaceA includes pre-trained parameters, evaluation indicator values, and a neural network architecture of a neural network that are obtained in the search space spaceA. Information stored in the sub-knowledge base corresponding to the search space spaceB includes pre-trained parameters, evaluation indicator values, and a neural network architecture of a neural network that are obtained in the search space spaceB. Information stored in the sub-knowledge base corresponding to the search space spaceC includes pre-trained parameters, evaluation indicator values, and a neural network architecture of a neural network that are obtained in the search space spaceC.

Accordingly, in this case, when retrieval is performed in the knowledge base, a sub-knowledge base corresponding to the search space of the target neural network architecture may be first found in the knowledge base, and then the retrieval is performed in the sub-knowledge base. In this way, after the search space of the target neural network architecture is determined, the retrieval does not need to be performed in a sub-knowledge base corresponding to another search space, thereby narrowing a retrieval range of retrieval in the knowledge base, shortening a time consumed for retrieval in the knowledge base, and reducing resource consumption for retrieval in the knowledge base.

For example, it is assumed that the model file provided by the user indicates that the to-be-optimized neural network is a neural network ResNet34, and the target information provided by the user indicates that performance of the target neural network obtained through optimization needs to meet that inference precision on the CIFAR-10 dataset is at least 95.94%, and it is expected to improve inference performance of the target neural network on a GPU of a model A. In this case, it may be determined, based on the model file, that the search space of the target neural network architecture is a search space of the ResNet series neural network model. It is assumed that the evaluation indicator values stored in the knowledge base include an inference precision, an inference latency, and power consumption. Because the target information indicates only the inference precision, the inference latency and the power consumption that are required by the user need to be obtained based on the search space. In this case, a plurality of candidate neural network architectures may be generated based on a search space of the ResNet series neural network models, and inference is performed on neural network models corresponding to the plurality of candidate neural network architectures on the GPU of the model A, to obtain inference latencies and power consumption of the plurality of candidate neural network architectures. Then, retrieval is performed in the knowledge base based on the search space, the inference precision indicated by the target information, and the inference latency and power consumption of each candidate neural network architecture. When the retrieval is performed in the knowledge base, a ResNet18 neural network is found in the knowledge base. The ResNet18 neural network can meet the search space, and the inference latency and the power consumption that are determined based on the candidate neural network architecture, and an inference precision of the ResNet18 on the CIFAR-10 dataset is 96.01%. In other words, the ResNet18 neural network meets the search space determined based on the to-be-optimized neural network ResNet34, the target information provided by the user, and the inference latency and the power consumption that are determined based on the candidate neural network architecture. Therefore, the ResNet18 neural network may be determined as the target neural network architecture obtained after the optimization of the to-be-optimized neural network ResNet34.

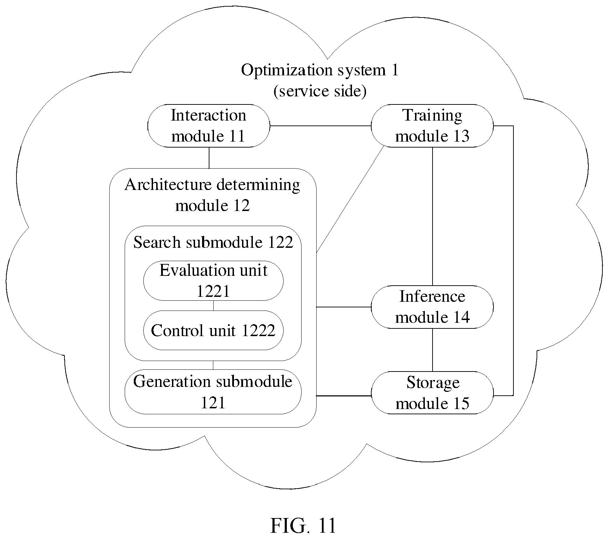

An implementation process of performing search by using the architecture search strategy to obtain the target neural network architecture is described below. In a possible implementation, a neural architecture search (neural architecture search, NAS) algorithm or an efficient neural architecture search (efficient neural architecture search, ENAS) algorithm or another conventional neural architecture search algorithm may be used for search. In another possible implementation, a model-based neural architecture search (model-based neural architecture search, MBNAS) method provided in an embodiment of this application may be used for search. Moreover, the MBNAS method may be implemented by using a plurality of functional modules. For ease of understanding, in this embodiment of this application, an implementation process of performing search by using the MBNAS method is described by using an example in which the MBNAS method is implemented by using a plurality of functional modules shown in FIG. 11.

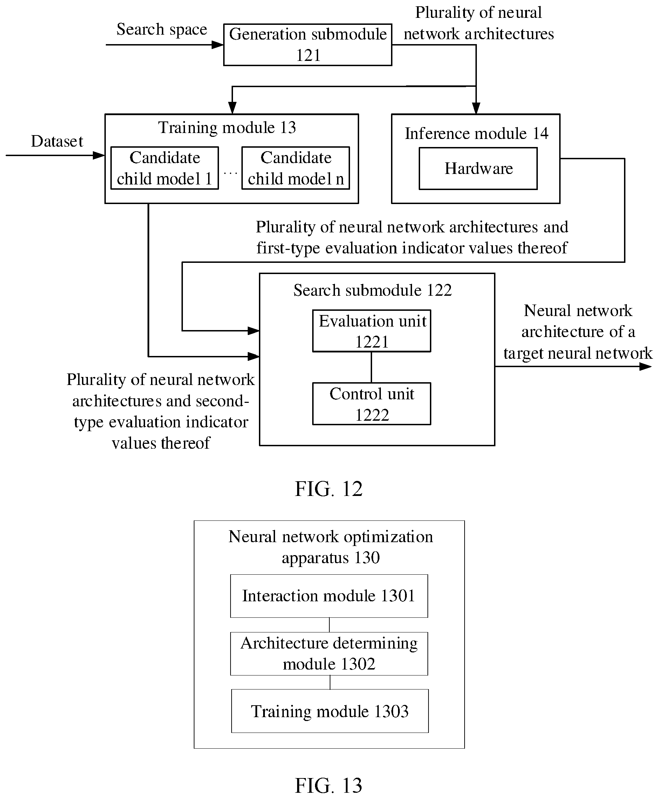

As shown in FIG. 11, the functional modules configured to implement the MBNAS method include an architecture determining module 12, a training module 13, and an inference module 14. The architecture determining module 12 includes a generation submodule 121 and a search submodule 122. The search submodule 122 includes an evaluation unit 1221 and a control unit 1222. With reference to a schematic diagram of a process shown in FIG. 12, a process of performing search by using the MBNAS method is described. The process includes the following steps.

Step 5041: The generation submodule generates a plurality of neural network architectures based on a search space, and provides the plurality of neural network architectures to the training module and the inference module.

As described above, the search space includes a value range of each attribute of each neuron in the neural network architecture of the optimized neural network. In this case, the generation submodule may sample the search space to obtain a value of an attribute of each neuron in the neural network architecture of the optimized neural network, to generate a plurality of neural network architectures. Moreover, when sampling the search space, the generation submodule may perform the sampling in a random manner. In this way, balance of samples subsequently used for training the evaluation unit can be ensured. Alternatively, the generation submodule may sample the search space in another manner. This is not specifically limited in this embodiment of this application.

Step 5042: The training module obtains a plurality of candidate child models through training based on the plurality of neural network architectures, obtains second-type evaluation indicator values of the plurality of candidate child models, and provides the plurality of neural network architectures and the second-type evaluation indicator values of the plurality of candidate child models to the search submodule.

The training module may perform weight initialization on the neural network architecture to obtain a plurality of initial child models, and then train the plurality of initial child models by using training data, to obtain the second-type evaluation indicator values of the plurality of candidate child models. Optionally, the second-type evaluation indicator values may include an inference latency and power consumption. The training data used for training the initial child models may be a public dataset such as the ImageNet dataset, or a dataset provided by the user.

Because training processes of the plurality of initial child models do not depend on each other, the training module may concurrently train the plurality of initial child models. In this way, a training duration can be shortened, and training efficiency can be improved.

Step 5043: The inference module performs, on hardware, inference on a plurality of child models corresponding to the plurality of neural network architectures provided by the generation submodule, to obtain first-type evaluation indicator values of the plurality of child models on the hardware, and provides the plurality of neural network architectures and the first-type evaluation indicator values of the plurality of child models to the search submodule.

Optionally, the first-type evaluation indicator values may include a precision value. When the target information provided by the user includes hardware information, hardware used for performing inference on the child models may be hardware indicated by the hardware information, or hardware that is in hardware already configured for the inference module and that has a relatively high performance similarity with hardware indicated by the hardware information. When the target information provided by the user does not include the hardware information, that is, the user does not specify hardware used for running the target neural network, the hardware used for performing inference on the child models may be the hardware already configured for the inference module.

Moreover, the plurality of child models on which the inference module performs inference on the hardware may be a plurality of initial child models obtained by the inference module by performing weight initialization on the neural network architectures provided by the generation submodule, or may be the plurality of candidate child models obtained by the training module by training the plurality of initial child models. In addition, only one of the inference module, the training module, and the generation submodule needs to provide the plurality of neural network architectures generated by the generation submodule to the search submodule.

Similar to the training module, the inference module may perform inference on the hardware of the plurality of child models in parallel, to obtain the first-type evaluation indicator values of the plurality of child models on the hardware.

Step 5044: The search submodule determines a target neural network architecture based on the plurality of neural network architectures, the second-type evaluation indicator values of the plurality of candidate child models, and the first-type evaluation indicator values of the plurality of child models.

The search submodule may train the evaluation unit based on the plurality of neural network architectures, the second-type evaluation indicator values of the plurality of candidate child models, and the first-type evaluation indicator values of the plurality of child models. Then, the search submodule predicts, by using the trained evaluation unit, the neural network architecture provided by the control unit, to obtain an evaluation indicator value corresponding to the neural network architecture provided by the control unit; uses the evaluation indicator value as a feedback for training the control unit; and then determines the target neural network architecture by using the trained control unit.

The evaluation unit is a neural network, and a training process of the evaluation unit includes: inputting the neural network architecture generated by the generation submodule and the first-type evaluation indicator value and the second-type evaluation indicator value that correspond to the neural network architecture into the evaluation unit; performing supervised learning by using the input first-type evaluation indicator value and the input second-type evaluation indicator value as labels of the input neural network architecture, so that the evaluation unit determines a loss value based on the labels and an evaluation indicator value obtained by the evaluation unit by predicting the neural network architecture; and updating weight parameters of the evaluation unit based on the loss value until a training end condition of the evaluation unit is met, for example, the evaluation unit tends to converge, or the loss value of the evaluation unit is less than a preset loss value. The evaluation unit may be a recurrent neural network. A set of training data used for training the evaluation unit includes any one of the plurality of neural network architectures generated by the generation submodule, the second-type evaluation indicator value of the alternative child model corresponding to the neural network, and the first-type evaluation indicator value of the child model corresponding to the neural network.

The control unit is also a neural network. The control unit may generate a neural network architecture based on the search space. The trained evaluation unit may predict an evaluation indicator value (for example, including at least one of the first-type evaluation indicator value and the second-type evaluation indicator value) of the neural network architecture generated by the control unit. The predicted evaluation indicator value is used as a reward (reward) for training the control unit, to adjust weight parameters of the control unit based on the reward until a training end condition of the control unit is met, for example, the control unit tends to converge. The control unit may be a recurrent neural network.

The trained control unit is configured to generate a plurality of candidate neural network architectures based on the search space of the target neural network. The search submodule may obtain the plurality of candidate neural network architectures, obtain a plurality of initial neural networks based on the plurality of candidate neural network architectures, separately train the plurality of initial neural networks to obtain a plurality of candidate neural networks corresponding to the plurality of candidate neural network architectures, separately perform inference on the plurality of candidate neural networks to obtain evaluation indicator values of the plurality of candidate neural networks, then filter, based on the evaluation indicator values of the plurality of candidate neural networks, a candidate neural network that meets a specified filtering condition, and determine the neural network architecture that meets the specified filtering condition as the target neural network architecture. The specified filtering condition may be determined based on at least one of the search space and the target information. For example, the specified filtering condition indicates that the target neural network architecture needs to meet the performance requirement of the user for the target neural network that is indicated by the target information. In addition, if a plurality of candidate neural networks in the plurality of candidate neural networks meet the performance requirement, a neural network architecture of a candidate neural network with the best performance may be determined as the target neural network architecture. Moreover, the plurality of initial neural networks may be trained by using a model cloning method provided in this embodiment of this application, and a training set used for training may be a public dataset such as the ImageNet dataset. In some possible implementations, the search submodule may train the plurality of initial neural networks by using the training module. In addition, when the training module is deployed on the user side, the plurality of initial neural networks need to be sent to the training module deployed on the user side, to perform a training process by using the training module. Moreover, the foregoing description is provided by using an example in which all training functions required in the process of performing search by using the MBNAS method are provided by the training module 13, and all inference functions required are provided by the inference module 14. In a possible implementation, the training function required in the search process may not be provided by the training module 13, and the inference function required may not be provided by the inference module 14. For example, the architecture determining module further includes a training submodule and an inference submodule. The training submodule is configured to provide the training function required in the search process, and the inference submodule is configured to provide the inference function required in the search process.

It should be noted that, it can be learned from the foregoing description that the knowledge base includes at least three types of information, the at least three types of information include pre-trained parameters, evaluation indicator values, and a neural network architecture of a neural network, and the pre-trained parameters and the evaluation indicator values may be considered as label information of the neural network architecture in the neural network architecture. If the user specifies the training set of the target neural network, there are the following at least six retrieval results for retrieving the knowledge base based on the search space and the target information: matching none of the at least three types of information (that is, matching neither of the training set and the target information), matching only the pre-trained parameters (that is, matching only the training set), matching only some of a plurality of indicator values in the evaluation indicator values (that is, matching only some evaluation indicator values), matching only all evaluation indicator values (that is, matching all of a plurality of indicator values in the evaluation indicator values), matching the pre-trained parameters and matching some of the evaluation indicator values, and matching the pre-trained parameters and matching all of the evaluation indicator values. If the user does not specify the training set of the target neural network, there are the following at least three retrieval results for retrieving the knowledge base based on the search space and the target information: matching none of the evaluation indicator values, matching only some of the evaluation indicator values, and matching all of the evaluation indicator values.

When it matches the pre-trained parameters and matches all of the evaluation indicator values, or matches all of the evaluation indicator values, an existing neural network architecture in the knowledge base may be directly used. In all the other match cases, the MBNAS method needs to be used for search. Moreover, for the foregoing different match cases, an implementation process of performing search by using the MBNAS method is slightly different. Specifically, when it matches none of the at least three types of information, matches only the pre-trained parameters, matches only some of the evaluation indicator values with a specified training set, matches only all of the evaluation indicator values with a specified training set, or matches none of the evaluation indicator values, the search is performed according to the implementation process described above in step 5041 to step 5044. When it matches the pre-trained parameters and matches some of the evaluation indicator values, or matches only some of the evaluation indicator values when no training set is specified, if information that matches some of the evaluation indicator values is a second-type evaluation indicator value, step 5042 may not be performed, and the evaluation unit may be directly trained by using the second-type evaluation indicator value in the evaluation indicator values. If information that matches some of the evaluation indicator values is a first-type evaluation indicator value, step 5043 may not be performed, and the evaluation unit may be directly trained by using the first-type evaluation indicator value in the evaluation indicator values. When step 5042 or 5043 does not need to be performed, efficiency in optimizing the to-be-optimized neural network can be improved. In addition, because the first-type evaluation indicator value, the second-type evaluation indicator value, the search space, and the like are intermediate data obtained in a process in which the optimization system optimizes a neural network for another user, storing the intermediate data in the knowledge base can enrich the knowledge base and improve optimization efficiency of the to-be-optimized neural network.

In conclusion, in the neural network optimization method provided in this embodiment of this application, a to-be-optimized neural network may be first mapped to a relatively similar search space based on a model file of the to-be-optimized neural network, then a target neural network architecture is determined based on the search space, and the target neural network architecture is trained to obtain a target neural network with significantly improved performance, and then a model file of the target neural network is provided to a user. According to the method, performance of the optimized neural network can be significantly improved, and the optimized neural network can be used to resolve a relatively complex task, thereby ensuring an application scope of the optimized neural network.

Moreover, because the method does not require the user to upload training data, the problem that the user cannot provide data for training to a platform due to limitations on privacy, law, or transmission of the data can be avoided, thereby protecting the user data and improving applicability of the neural network optimization method.

In addition, because the method can complete the optimization of the to-be-optimized neural network only with the to-be-optimized neural network and optionally the target information provided by the user, unlike an advanced automated machine learning platform, the user can perform optimization without having to reserve some knowledge related to model optimization, thereby lowering a threshold for using the neural network optimization method and extending a usage scope of the neural network optimization method.

In addition, the intermediate data in the search process is stored in the knowledge base, so that the intermediate data can be used to provide a service for another user. Moreover, the retrieval is first performed in the knowledge base, so that when there is an existing neural network architecture that matches the to-be-optimized neural network in the knowledge base, the architecture search strategy no longer needs to be used to search for a neural network architecture. This can improve optimization efficiency of the to-be-optimized neural network and reduce resource consumption for optimizing the neural network.

It should be noted that the order of the steps of the neural network optimization method provided in this embodiment of this application may be adjusted appropriately, or the steps may be correspondingly added or deleted depending on the situation. Any variation method readily figured out by a person skilled in the art within the technical scope disclosed in this application shall fall within the protection scope of this application. Therefore, details are not described herein.

An embodiment of this application further provides a neural network optimization apparatus. The neural network optimization apparatus may implement some or all functions of the foregoing optimization system 1. When the neural network optimization apparatus is a software apparatus, the neural network optimization apparatus may be a part or all of the foregoing optimization system. As shown in FIG. 13, the neural network optimization apparatus 130 includes:
an interaction module 1301, configured to receive a model file of a to-be-optimized neural network;
an architecture determining module 1302, configured to obtain a search space of a target neural network architecture based on the model file of the to-be-optimized neural network, where the search space includes a value range of each attribute of each neuron in the target neural network architecture;
the architecture determining module 1302, further configured to obtain the target neural network architecture based on the search space;
a training module 1303, configured to train the target neural network architecture based on the model file of the to-be-optimized neural network, to obtain a model file of the target neural network; and
the interaction module 1301, further configured to provide the model file of the target neural network to a user.

Optionally, the interaction module 1301 further receives target information input by the user, where the target information includes one or more of the following information: information about hardware running the target neural network, and information indicating a performance requirement of the user for the target neural network.

Correspondingly, the architecture determining module 1302 is specifically configured to obtain the search space of the target neural network architecture based on the model file of the to-be-optimized neural network and the target information.

Optionally, the architecture determining module 1302 is specifically configured to: obtain, based on the search space, specified information reflecting the performance requirement of the user for the target neural network; perform retrieval in a knowledge base based on the specified information; and when there is an existing neural network architecture that meets the specified information in the knowledge base, determine the existing neural network architecture as the target neural network architecture.

Optionally, the specified information includes a plurality of types of evaluation indicator values, and the architecture determining module 1302 is specifically configured to: obtain at least one candidate neural network architecture based on the search space; and perform training and inference on each candidate neural network architecture, to obtain the plurality of types of evaluation indicator values of each candidate neural network architecture.

Optionally, the architecture determining module 1302 is specifically configured to: perform retrieval in the knowledge base based on the plurality of types of evaluation indicator values of each candidate neural network architecture; and when any neural network architecture in the knowledge base meets the plurality of types of evaluation indicator values of any candidate neural network architecture, determine that there is an existing neural network architecture that meets the specified information in the knowledge base.

Optionally, the architecture determining module 1302 is further specifically configured to: when there is no existing neural network architecture that meets the specified information in the knowledge base, search for the target neural network architecture by using an architecture search strategy.

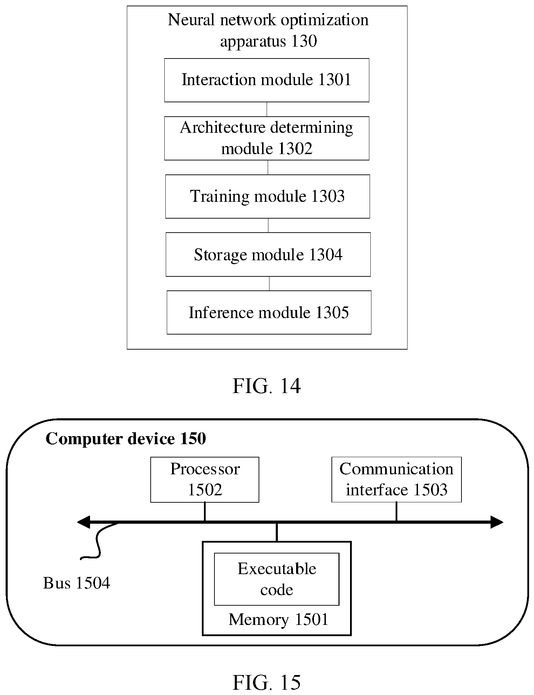

Optionally, as shown in FIG. 14, the neural network optimization apparatus 130 further includes: a storage module 1304, configured to store, in the knowledge base, intermediate data generated in the process of searching for the target neural network architecture, where the intermediate data includes one or more of the following: the search space of the target neural network architecture, the candidate neural network architecture obtained based on the search space, a hardware-dependent first-type evaluation indicator value, a hardware-independent second-type evaluation indicator value, and information about hardware for running the target neural network.

Optionally, the training module 1303 is specifically configured to train, based on the model file of the to-be-optimized neural network, the target neural network architecture by using a model cloning apparatus 130, to obtain the model file of the target neural network.

Optionally, the architecture determining module 1302 is specifically configured to input the model file of the to-be-optimized neural network into a pre-trained artificial intelligence model, to obtain the search space of the target neural network architecture that is output by the artificial intelligence model.

Optionally, as shown in FIG. 14, the neural network optimization apparatus 130 further includes: an inference module 1305, configured to perform speed optimization on the target neural network by using an optimization strategy, where the optimization strategy includes a graph optimization strategy and an operator optimization strategy.

Correspondingly, the interaction module 1301 is specifically configured to provide a model file of a speed-optimized target neural network to the user.

It may be clearly understood by a person skilled in the art that, for the purpose of convenient and brief description, for a specific working process of the foregoing apparatuses and modules, refer to the corresponding content in the foregoing method embodiment, and details are not described herein again.

In conclusion, in the neural network optimization apparatus provided in this embodiment of this application, a to-be-optimized neural network may be first mapped to a relatively similar search space based on a model file of the to-be-optimized neural network, then a target neural network architecture is determined based on the search space, and the target neural network architecture is trained to obtain a target neural network with significantly improved performance, and then a model file of the target neural network is provided to a user. According to the neural network optimization apparatus, performance of the optimized neural network can be significantly improved, and the optimized neural network can be used to resolve a relatively complex task, thereby ensuring an application scope of the optimized neural network.

Moreover, because the neural network optimization apparatus does not require the user to upload training data, the problem that the user cannot provide data for training to a platform due to limitations on privacy, law, or transmission of the data can be avoided, thereby protecting the user data and improving applicability of the neural network optimization apparatus.

In addition, because the neural network optimization apparatus can complete the optimization of the to-be-optimized neural network only with the to-be-optimized neural network and optionally the target information provided by the user, unlike an advanced deep learning AutoML platform, the user can perform optimization without having to reserve some knowledge related to model optimization, thereby lowering a threshold for using the neural network optimization apparatus and extending a usage scope of the neural network optimization apparatus.

In addition, the intermediate data in the search process is stored in the knowledge base, so that the intermediate data can be used to provide a service for another user. Moreover, the retrieval is first performed in the knowledge base, so that when there is an existing neural network architecture that matches the to-be-optimized neural network in the knowledge base, the architecture search strategy no longer needs to be used to search for a neural network architecture. This can improve optimization efficiency of the to-be-optimized neural network and reduce resource consumption for optimizing the neural network.

FIG. 15 is a schematic diagram of a structure of a computer device according to an embodiment of this application. The optimization system shown in FIG. 1, FIG. 2, or FIG. 3 may be deployed in the computer device. As shown in FIG. 15, the computer device 150 includes a memory 1501, a processor 1502, a communication interface 1503, and a bus 1504. The memory 1501, the processor 1502, and the communication interface 1503 are communicatively connected to each other through the bus 1504. Moreover, the computer device 150 may include a plurality of processors 1502, so that functions of the foregoing different functional modules are implemented by different processors.

The memory 1501 may be a read-only memory (read only memory, ROM), a static storage device, a dynamic storage device, or a random access memory (random access memory, RAM). The memory 1501 may store executable code. When the executable code stored in the memory 1501 is executed by the processor 1502, the processor 1502 and the communication interface 1503 are configured to perform the neural network optimization method according to the embodiment of this application. The memory 1501 may further include an operating system and other software modules and data required for running processes. Moreover, the operating system may be Linux^{™}, Unix^{™}, Windows^{™}, or the like.

The processor 1502 may be a general-purpose central processing unit (central processing unit, CPU), a microprocessor, an application specific integrated circuit (application specific integrated circuit, ASIC), a graphics processing unit (graphics processing unit, GPU), or one or more integrated circuits.

The processor 1502 may also be an integrated circuit chip and has a signal processing capability. In an implementation process, some or all functions of the neural network optimization method in this application may be implemented by an integrated logic circuit in the form of hardware or instructions in the form of software in the processor 1502. The foregoing processor 1502 may also be a general-purpose processor, a digital signal processor (digital signal processing, DSP), an application specific integrated circuit (ASIC), a field programmable gate array (field programmable gate array, FPGA) or another programmable logic device, a discrete gate or transistor logic device, or a discrete hardware component. Various methods, steps, and logical block diagrams disclosed in the embodiments of this application may be implemented or executed. The general-purpose processor may be a microprocessor, or the processor may be any conventional processor or the like. The steps of the methods disclosed with reference to embodiments of this application may be directly executed and accomplished by a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1501. The processor 1502 reads information in the memory 1501, and completes the neural network optimization method in the embodiment of this application in combination with hardware of the processor 1502.

The communication interface 1503 uses a transceiver module such as, but not limited to, a transceiver, to implement communication between the computer device 150 and other devices or communications networks. For example, the communication interface 1503 may be any one or any combination of the following components: a network interface (for example, an Ethernet interface), a wireless network adapter, and another component having a network access function.

The bus 1504 may include a path for transmitting information between various components (for example, the memory 1501, the processor 1502, and the communication interface 1503) of the computer device 150.

A communication path is established between each of the foregoing computer devices 150 via a communication network. Each computer device 150 is configured to implement some functions of the neural network optimization method according to the embodiment of this application. Any computer device 150 may be a computer device (for example, a server) in a cloud data center, a computer device in an edge data center, or the like.

The descriptions of the procedures corresponding to the foregoing accompanying drawings have respective focuses. For a part that is not described in detail in a procedure, refer to related descriptions of another procedure.

All or some of the foregoing embodiments may be implemented by using software, hardware, firmware, or any combination thereof. When software is used to implement the embodiments, all or some of the embodiments may be implemented in the form of a computer program product. A computer program product that provides a data synchronization cloud service includes one or more computer instructions. When the computer program instructions are loaded and executed on the computer device, all or some of the procedures or functions of the neural network optimization method according to the embodiment of this application are implemented.

The computer device may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide the data synchronization cloud service.

An embodiment of this application further provides a storage medium. The storage medium is a non-volatile computer-readable storage medium. When instructions in the storage medium are executed by a processor, the neural network optimization method according to the embodiment of this application is implemented.

An embodiment of this application further provides a computer program product including instructions. When the computer program product runs on a computer, the computer is enabled to perform the neural network optimization method according to the embodiment of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are only optional embodiments of this application, but are not intended to limit this application. Any modification, equivalent replacement, or improvement made within the concept and principle of this application should fall within the protection scope of this application.

## Claims

1. A neural network optimization method, comprising:
receiving a model file of a to-be-optimized neural network;
obtaining a search space of a target neural network architecture based on the model file of the to-be-optimized neural network, wherein the search space comprises a value range of each attribute of each neuron in the target neural network architecture;
obtaining the target neural network architecture based on the search space;
training the target neural network architecture based on the model file of the to-be-optimized neural network, to obtain a model file of a target neural network; and
providing the model file of the target neural network to a user.

2. The method according to claim 1, wherein the method further comprises:
receiving target information input by the user, wherein the target information comprises one or more of the following information: information about hardware running the target neural network, and information indicating a performance requirement of the user for the target neural network; and
the obtaining a search space of a target neural network architecture based on the model file of the to-be-optimized neural network comprises:
obtaining the search space of the target neural network architecture based on the model file of the to-be-optimized neural network and the target information.

3. The method according to claim 1 or 2, wherein the obtaining the target neural network architecture based on the search space comprises:
obtaining, based on the search space, specified information reflecting the performance requirement of the user for the target neural network;
performing retrieval in a knowledge base based on the specified information; and
when there is an existing neural network architecture that meets the specified information in the knowledge base, determining the existing neural network architecture as the target neural network architecture.

4. The method according to claim 3, wherein the specified information comprises a plurality of types of evaluation indicator values, and the obtaining, based on the search space, specified information reflecting the performance requirement of the user for the target neural network comprises:
obtaining at least one candidate neural network architecture based on the search space; and
performing training and inference on each candidate neural network architecture, to obtain the plurality of types of evaluation indicator values of each candidate neural network architecture.

5. The method according to claim 4, wherein the performing retrieval in a knowledge base based on the specified information comprises:
performing retrieval in the knowledge base based on the plurality of types of evaluation indicator values of each candidate neural network architecture; and
when any neural network architecture in the knowledge base meets the plurality of types of evaluation indicator values of any candidate neural network architecture, determining that there is an existing neural network architecture that meets the specified information in the knowledge base.

6. The method according to any one of claims 3 to 5, wherein the obtaining the target neural network architecture based on the search space further comprises:
when there is no existing neural network architecture that meets the specified information in the knowledge base, searching for the target neural network architecture by using an architecture search strategy.

7. The method according to claim 6, wherein the method further comprises:
storing, in the knowledge base, intermediate data generated in the process of searching for the target neural network architecture, wherein the intermediate data comprises one or more of the following: the search space of the target neural network architecture, the candidate neural network architecture obtained based on the search space, a hardware-dependent first-type evaluation indicator value, a hardware-independent second-type evaluation indicator value, and information about hardware for running the target neural network.

8. The method according to any one of claims 1 to 7, wherein the training the target neural network architecture based on the model file of the to-be-optimized neural network, to obtain a model file of a target neural network comprises:
training, based on the model file of the to-be-optimized neural network, the target neural network architecture by using a model cloning method, to obtain the model file of the target neural network.

9. The method according to any one of claims 1 to 8, wherein the obtaining a search space of a target neural network architecture based on the model file of the to-be-optimized neural network comprises:
inputting the model file of the to-be-optimized neural network into a pre-trained artificial intelligence model, to obtain the search space of the target neural network architecture that is output by the artificial intelligence model.

10. The method according to any one of claims 1 to 9, wherein after the training the target neural network architecture based on the model file of the to-be-optimized neural network, to obtain a model file of a target neural network, the method further comprises:
performing speed optimization on the target neural network by using an optimization strategy, wherein the optimization strategy comprises a graph optimization strategy and an operator optimization strategy; and
the providing the model file of the target neural network to a user comprises:
providing a model file of a speed-optimized target neural network to the user.

11. The method according to any one of claims 1 to 9, wherein after the providing the model file of the target neural network to a user, the method further comprises:
receiving a speed optimization request sent by the user;
performing, based on the speed optimization request, speed optimization on the target neural network by using an optimization strategy, wherein the optimization strategy comprises a graph optimization strategy and an operator optimization strategy; and
providing a model file of a speed-optimized target neural network to the user.

12. A neural network optimization apparatus, comprising:
an interaction module, configured to receive a model file of a to-be-optimized neural network;
an architecture determining module, configured to obtain a search space of a target neural network architecture based on the model file of the to-be-optimized neural network, wherein the search space comprises a value range of each attribute of each neuron in the target neural network architecture;
the architecture determining module, further configured to obtain the target neural network architecture based on the search space;
a training module, configured to train the target neural network architecture based on the model file of the to-be-optimized neural network, to obtain a model file of the target neural network; and
the interaction module, further configured to provide the model file of the target neural network to a user.

13. The apparatus according to claim 12, wherein
the interaction module further receives target information input by the user, wherein the target information comprises one or more of the following information: information about hardware running the target neural network, and information indicating a performance requirement of the user for the target neural network; and
the architecture determining module is specifically configured to obtain the search space of the target neural network architecture based on the model file of the to-be-optimized neural network and the target information.

14. The apparatus according to claim 12 or 13, wherein the architecture determining module is specifically configured to:
obtain, based on the search space, specified information reflecting the performance requirement of the user for the target neural network;
perform retrieval in a knowledge base based on the specified information; and
when there is an existing neural network architecture that meets the specified information in the knowledge base, determine the existing neural network architecture as the target neural network architecture.

15. The apparatus according to claim 14, wherein the specified information comprises a plurality of types of evaluation indicator values, and the architecture determining module is specifically configured to:
obtain at least one candidate neural network architecture based on the search space; and
perform training and inference on each candidate neural network architecture, to obtain the plurality of types of evaluation indicator values of each candidate neural network architecture.

16. The apparatus according to claim 15, wherein the architecture determining module is specifically configured to:
perform retrieval in the knowledge base based on the plurality of types of evaluation indicator values of each candidate neural network architecture; and
when any neural network architecture in the knowledge base meets the plurality of types of evaluation indicator values of any candidate neural network architecture, determine that there is an existing neural network architecture that meets the specified information in the knowledge base.

17. The apparatus according to any one of claims 14 to 16, wherein the architecture determining module is further specifically configured to:
when there is no existing neural network architecture that meets the specified information in the knowledge base, search for the target neural network architecture by using an architecture search strategy.

18. The apparatus according to claim 17, further comprising:
a storage module, configured to store, in the knowledge base, intermediate data generated in the process of searching for the target neural network architecture, wherein the intermediate data comprises one or more of the following: the search space of the target neural network architecture, the candidate neural network architecture obtained based on the search space, a hardware-dependent first-type evaluation indicator value, a hardware-independent second-type evaluation indicator value, and information about hardware for running the target neural network.

19. The apparatus according to any one of claims 12 to 18, wherein the training module is specifically configured to:
train, based on the model file of the to-be-optimized neural network, the target neural network architecture by using a model cloning apparatus, to obtain the model file of the target neural network.

20. The apparatus according to any one of claims 12 to 19, wherein the architecture determining module is specifically configured to:
input the model file of the to-be-optimized neural network into a pre-trained artificial intelligence model, to obtain the search space of the target neural network architecture that is output by the artificial intelligence model.

21. The apparatus according to any one of claims 12 to 20, further comprising:
an inference module, configured to perform speed optimization on the target neural network by using an optimization strategy, wherein the optimization strategy comprises a graph optimization strategy and an operator optimization strategy; and
the interaction module, specifically configured to provide a model file of a speed-optimized target neural network to the user.

22. The apparatus according to any one of claims 12 to 20, wherein
the interaction module is further configured to receive a speed optimization request sent by the user;
the apparatus further comprises: an inference module, configured to perform, based on the speed optimization request, speed optimization on the target neural network by using an optimization strategy, wherein the optimization strategy comprises a graph optimization strategy and an operator optimization strategy; and
the interaction module is further configured to provide a model file of a speed-optimized target neural network to the user.

23. A computer device, comprising a processor and a memory, wherein the memory stores a computer program, and when the processor executes the computer program, the computer device implements the method according to any one of claims 1 to 11.

24. A non-transitory computer-readable storage medium, wherein when instructions in the computer-readable storage medium are executed by a processor, the processor performs the method according to any one of claims 1 to 11.

25. A computer program product comprising instructions, wherein when the instructions in the computer program product are run on a computer, the computer performs the method according to any one of claims 1 to 11.
